# FASCICULE DE BREVET EUROPEEN

(11) **EP 3 060 450 B1**
(45) Date de publication et mention de la délivrance du brevet: **21.06.2017**
(21) Numéro de dépôt: 14786863.2
(22) Date de dépôt: 17.10.2014
(51) Int. Cl.: B61F 5/26, B60L 5/39

(54) **BOGIE DE VEHICULE FERROVIAIRE ET PROCEDE DE FABRICATION D'UN TEL BOGIE**
DREHGESTELL FÜR EIN SCHIENENFAHRZEUG SOWIE DESSEN HERSTELLUNGSVERFAHREN
TRUCK FOR A RAILWAY VEHICLE AND METHOD FOR MANUFACTURING SUCH A TRUCK

(30) Priorité: 21.10.2013 FR 1360238
(43) Date de publication de la demande: 31.08.2016
(73) Titulaire: Mersen France SB SAS, 69720 Saint-Bonnet-de-Mure (FR)
(72) Inventeur: MUCIG, Yves, 69003 Lyon (FR); CHARROIN, Thierry, F-38230 Tignieu Jameyzieu (FR)
(74) Mandataire: Lavoix
(86) Numéro de dépôt international: PCT/EP2014/072338
(87) Numéro de publication internationale: WO 2015/059052

(56) Documents cités:
- FR-A1- 2 529 153
- US-A- 4 526 108
- US-A- 6 079 335

## Description

La présente invention concerne un bogie de véhicule ferroviaire, ainsi qu'un procédé de fabrication d'une poutre d'un tel bogie.

Un bogie de véhicule ferroviaire est un chariot situé sous le véhicule, sur lequel sont fixés les boites d'essieux et les roues. Le bogie est mobile par rapport au châssis du véhicule et il est prévu pour s'orienter convenablement dans les virages. Le document US 4526108 décrit un bogie de véhicule ferroviaire selon le préambule de la revendication 1. En général, lorsque le véhicule ferroviaire est un métro, la voie ferrée comporte deux premiers rails supportant les roues du véhicule ferroviaire, ainsi que deux deuxièmes rails disposés le long des premiers rails. Une différence de potentiel électrique est établie entre, d'une part, les premiers rails et, d'autre part, les deuxièmes rails.

Généralement, les premiers rails sont appelés « rails de roulement », et l'expression « troisième rail » est utilisée pour désigner les deuxièmes rails.

Le bogie est équipé de deux organes appelés « capteurs de courant » qui sont en contact avec les deuxièmes rails et permettent la circulation d'un courant électrique entre les premiers et deuxièmes rails, de manière à alimenter le véhicule ferroviaire en énergie électrique.

Il est connu de fixer un capteur de courant sur une poutre du bogie dont les extrémités sont supportées chacune par une boîte d'essieux supportant également une roue du bogie. De manière classique, ces poutres sont rectilignes et sont en bois ou en matériau plastique. Dans certains cas, cette géométrie ne permet pas de loger le capteur de courant dans l'espace qui lui est alloué, compte tenu des contraintes liées à l'encombrement des éléments qui constituent le bogie, car la poutre traverse l'emplacement prévu pour le capteur de courant. En particulier, le capteur de courant ne doit pas s'étendre au-delà d'un gabarit qui délimite un contour à ne pas dépasser afin d'éviter les obstacles présents le long de la voie ferrée.

C'est à ces inconvénients qu'entend plus particulièrement remédier l'invention en proposant un bogie de véhicule ferroviaire comprenant :
- au moins deux roues supportées chacune par une boite d'essieu,
- un longeron de liaison mécanique des boites d'essieux,
- une poutre s'étendant entre les boites d'essieu et supportant un organe de transmission d'un courant électrique à un rail d'une voie ferrée.
La poutre s'étend le long d'une ligne incurvée qui présente un rayon de courbure continument variable le long de la ligne incurvée. La poutre est réalisée à partir d'un alliage métallique et ne présente pas de soudure perpendiculaire à la ligne incurvée. Le long de la ligne incurvée, des centres de cercles de courbure tangents à la ligne incurvée sont situés d'un même côté d'une surface courbe qui passe par la ligne incurvée et qui est parallèle aux axes de rotation des roues.

Grâce à l'invention, la poutre est monobloc et ne comporte pas de soudure transversale. Ainsi, la tenue mécanique de la poutre est améliorée. La forme incurvée de la poutre permet d'installer le capteur de courant dans l'espace libre disponible.

La poutre du bogie de l'invention est plus résistante qu'une poutre métallique réalisée par soudage de plusieurs tronçons de profilés rectilignes. En effet, la présence de soudures engendrerait une fragilité mécanique, accentuée par les chocs et les vibrations subis par le bogie. De plus, dans le domaine ferroviaire, les soudures doivent respecter les normes prescrites, ce qui rendrait la fabrication de la poutre compliquée et couteuse. Au contraire, la poutre monobloc de l'invention est de fabrication simple et peu coûteuse.

Selon des aspects avantageux mais non obligatoire de l'invention, un tel bogie de véhicule ferroviaire peut incorporer une ou plusieurs des caractéristiques techniques suivantes, prises dans toute combinaison techniquement admissible :
- Les centres des cercles de courbure sont situés en dessous de la surface courbe.
- La ligne incurvée est incurvée dans une direction qui est incluse dans un plan perpendiculaire aux axes de rotation des roues.
- La poutre est creuse, avec notamment une section de forme carrée, de « U » ou circulaire.
- Un rayon de courbure de la ligne incurvée est constant le long de la ligne incurvée.
- La poutre est revêtue d'un revêtement électriquement isolant.
- Une crémaillère est intégrée dans l'organe de transmission du courant électrique pour le réglage de la position d'un frotteur prévu pour venir en contact avec le rail, par rapport à un corps de l'organe de transmission du courant électrique.
- L'organe de transmission du courant électrique est logé dans un boitier réalisé à partir d'un matériau électriquement isolant.

L'invention concerne également un procédé de fabrication d'un tel bogie, dans lequel la poutre est fabriquée par cintrage d'une barre métallique rectiligne, notamment au moyen d'une cintreuse à galets.

De manière avantageuse, la barre métallique est fabriquée par pliage et soudage d'une plaque métallique ou par extrusion au moyen d'une filière.

L'invention sera mieux comprise et d'autres avantages de celle-ci apparaitront plus clairement à la lumière de la description qui va suivre d'un bogie de véhicule ferroviaire et de son procédé de fabrication, donnée uniquement à titre d'exemple et faite en référence aux dessins annexés dans lesquels :
- la figure 1 est une vue partielle en perspective d'un bogie de véhicule ferroviaire conforme à l'invention ;

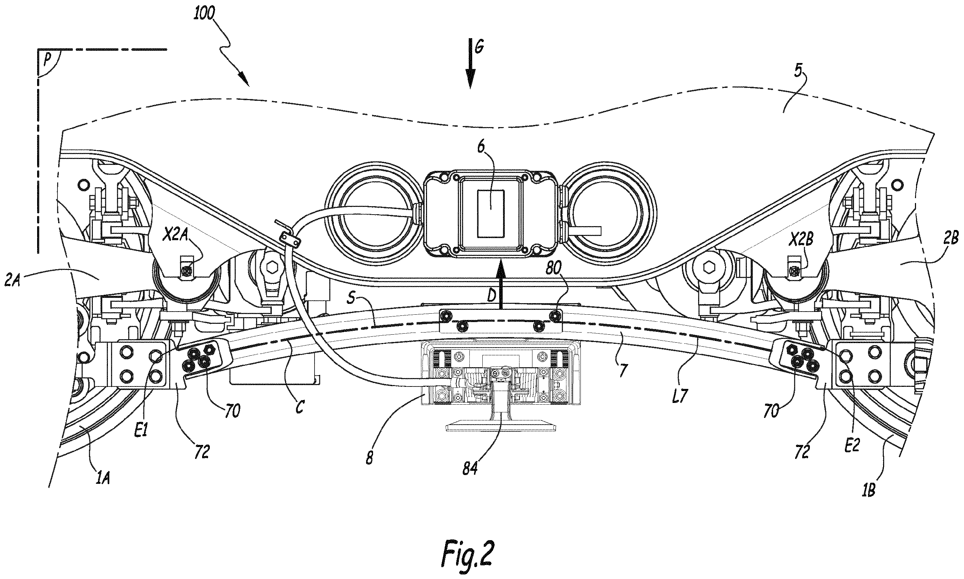

- la figure 2 est une vue latérale du détail II à la figure 1 ;
- la figure 3 est une vue de dessus d'une poutre, d'un capteur de courant et d'une boite à fusibles faisant partie du bogie de la figure 1 ;
- la figure 4 est une vue de devant du bogie de la figure 1, dans le sens de la flèche F1 sur cette figure ;

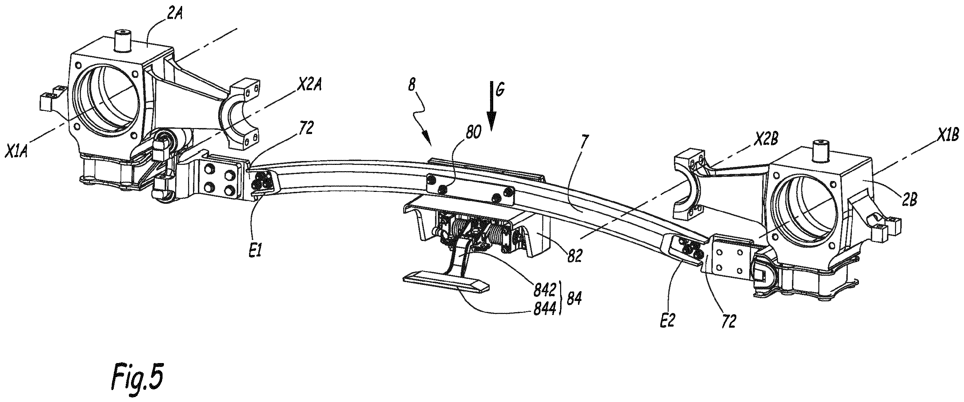

- la figure 5 est une vue en perspective de boîtes d'essieux, de la poutre et du capteur de courant du bogie de la figure 1 ; et
- la figure 6 est une vue en perspective du capteur de courant.

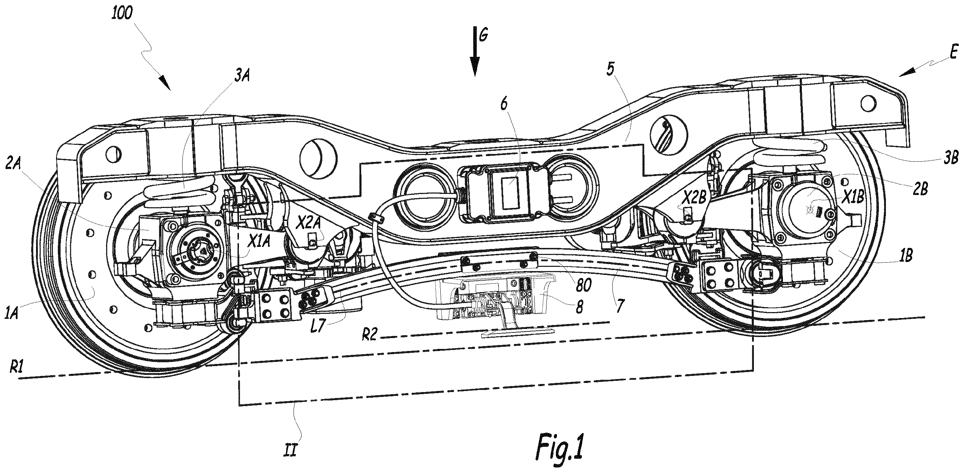

La figure 1 représente partiellement un premier sous-ensemble E faisant partie d'un bogie 100 de véhicule ferroviaire. Dans l'exemple représenté, il s'agit d'un bogie 100 de métro, étant entendu que l'invention s'applique également à d'autres types de véhicules ferroviaires, notamment les trains ou les tramways.

Le véhicule ferroviaire est apte à circuler sur une voie ferrée qui comprend deux premiers rails R1 parallèles et deux deuxièmes rails R2 disposés chacun le long de l'un des premiers rails R1. Un seul premier rail R1 ou « rail de roulement » et un seul deuxième rail R2 ou « troisième rail » sont représentés à la figure 1 chacun par une ligne en traits mixtes.

Le bogie 100 comprend quatre roues dont deux 1 A et 1B font partie du premier sous-ensemble E de la figure 1. Les roues 1A et 1B sont prévues pour être supportées par le premier rail R1. Les deux autres roues du bogie 100 font partie d'un deuxième sous-ensemble similaire au premier sous-ensemble E et sont prévues pour être supportées par l'autre premier rail R1, qui n'est pas montré sur les figures.

La suite de la description concerne le premier sous-ensemble E du bogie 100, étant entendu qu'elle s'applique de manière similaire au deuxième sous-ensemble.

Chaque roue 1 A et 1 B est guidée en rotation, autour d'un axe X1 A ou X1 B, dans une boîte d'essieu 2A et 2B du bogie 100. Un longeron 5 forme un élément de liaison qui relie mécaniquement les boîtes d'essieu 2A et 2B. Le longeron 5 est articulé en rotation avec chaque boite d'essieu 2A et 2B autour d'un X2A ou X2B parallèle aux axes X1A et X1 B. Le longeron 5 est une pièce métallique dimensionnée pour supporter le poids du véhicule ferroviaire et le transmettre aux boîtes d'essieu 2A et 2B.

Dans la suite de description, les termes « horizontal », « vertical », « haut » et « bas » sont définis par rapport au champ de gravité terrestre G, orienté verticalement et de haut en bas. Ces termes correspondent à l'orientation du bogie 100 sur les figures et dans la configuration d'utilisation du bogie 100 où les roues 1 A et 1B reposent sur le premier rail R1 qui est horizontal.

Les boîtes d'essieux 2A et 2B sont également reliées au longeron 5 par l'intermédiaire d'amortisseurs 3A et 3B qui atténuent les chocs et les vibrations du véhicule ferroviaire selon la direction verticale.

Les boîtes d'essieux 2A et 2B sont en outre reliées entre elles mécaniquement par une poutre 7 qui supporte un organe 8 de transmission du courant électrique circulant entre les premier et deuxième rails R1 et R2. La poutre 7 est un élément distinct du longeron 5, elle ne supporte pas le poids du véhicule ferroviaire.

L'organe 8, appelé également « capteur de courant », est relié électriquement à une boîte à fusibles 6 fixée sur le longeron 5.

Une différence de potentiel est présente entre les premiers rails R1 d'une part, et les deuxièmes rails R2 d'autre part, de manière à établir la circulation du courant électrique. Par exemple, le potentiel électrique des premiers rails R1 est nul, et le potentiel électrique des deuxièmes rails R2 est égal à 750 V, parfois égal à 1500 V.

Le capteur de courant 8 est fixé au moyen de quatre boulons 80 sur une zone médiane de la poutre 7. La poutre 7 comprend des moyens d'assemblage de la poutre avec le capteur de courant 8, constitués par des trous non visibles sur les figures qui reçoivent les tiges des boulons 80.

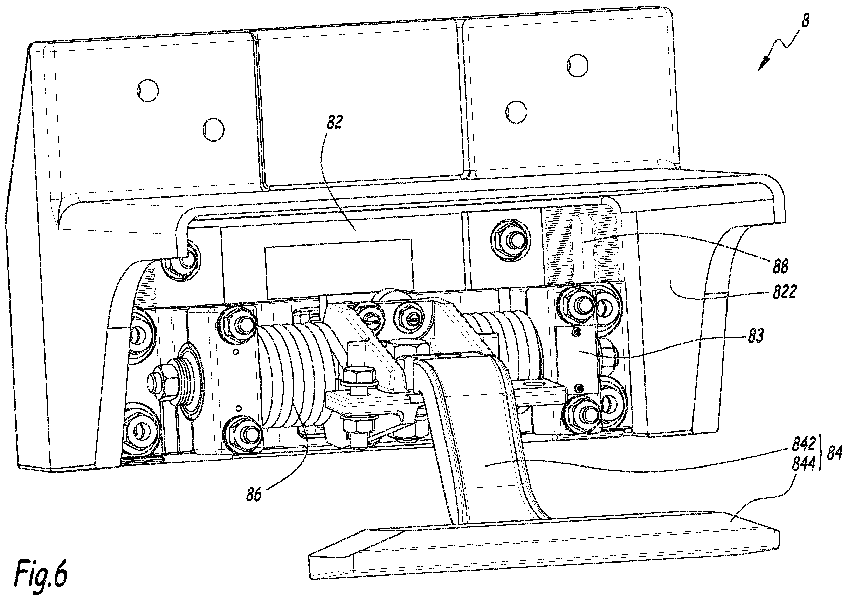

En référence à la figure 6, le capteur de courant 8 comprend un corps 82 ainsi qu'un frotteur 84 composé d'un bras 842 articulé en rotation, autour d'un axe Y8 perpendiculaire aux axes X1 A et X1 B, avec un charriot 83. Une plaquette 844 prévue pour frotter contre le deuxième rail R2 est reliée au bras 842. Dans l'exemple représenté sur les figures le frotteur 84 est monobloc. En variante, le bras 842 et la plaquette 844 sont deux pièces séparées qui sont assemblées entre elles.

Le corps 82 du capteur de courant 8 est logé dans un boitier de protection 822 réalisé à partir d'un matériau électriquement isolant.

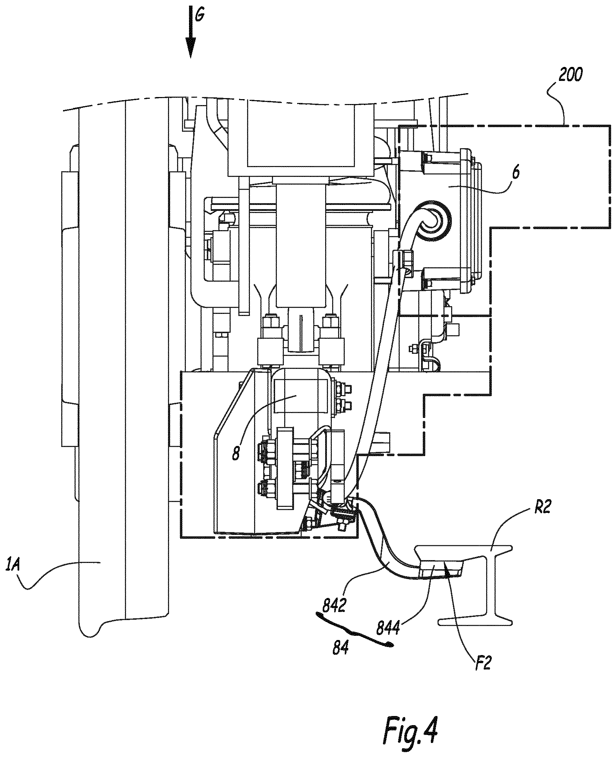

Des moyens de rappel élastique tels que des ressorts de torsion 86 tendent à faire pivoter le frotteur 84 vers le haut, afin de plaquer la plaquette 844 contre une face inférieure F2 d'une aile latérale R22 du deuxième rail R2, visible à la figure 4.

En variante, la plaquette 844 est en contact avec une face supérieure du deuxième rail R2. Dans ce cas, les moyens élastiques 86 tendent à faire pivoter le frotteur 84 vers le bas.

Des dents, non visibles sur les figures, sont montés sur le charriot 83 et coopèrent avec des crémaillères 88 fixées sur le corps 82 du capteur de courant 8. Ainsi, la glissière 83 est mobile en translation, selon la direction verticale, par rapport au corps 82 du capteur de courant 8.

Le mécanisme de dents et crémaillère 88 intégré au capteur de courant 8 permet d'ajuster la hauteur du frotteur 84 lors de la maintenance du bogie 100, afin de compenser l'usure des roues 1 A et 1 B. De cette manière, un contact satisfaisant est assuré entre la plaquette 844 et le deuxième rail R2. Des moyens de blocage, tels que des vis, permettant de fixer la glissière 83 sur le corps 82, une fois le réglage de la hauteur du charriot 83 effectué.

La poutre 7 est monobloc, c'est-à-dire réalisée en une seule pièce. La poutre 7 est réalisée à partir d'un alliage métallique tel qu'un acier de construction, par exemple un acier de nuance S355 J2H.

La poutre 7 est creuse et elle est fabriquée par pliage et soudage d'une plaque métallique. La poutre 7 comporte ainsi une soudure longitudinale, non visible sur les figures, qui relie deux bords de la plaque métallique à partir de laquelle la poutre 7 est fabriquée.

La poutre 7 s'étend le long d'une ligne L7 qui est incurvée dans un sens allant du bas vers le haut. La ligne L7 correspond à la fibre neutre de la poutre 7.

La ligne L7 est incurvée dans une direction D qui est incluse dans un plan P perpendiculaire aux axes de rotation X1 A et X1 B des roues 1 A et 1 B. La direction D est perpendiculaire à un plan passant par les axes de rotation X1 A et X1 B des roues 1 A et 1 B.

La poutre 7 présente une section transversale, prise perpendiculairement à la ligne L7, de forme carrée avec des angles arrondis.

La poutre 7 ne résulte pas de l'assemblage de plusieurs éléments, par exemple des tronçons de profilés, et elle ne comporte donc pas de soudure transversale perpendiculaire à la ligne L7.

La poutre 7 est en forme d'une portion d'arc de cercle C qui se superpose avec la ligne L7. Ainsi, le rayon de courbure de la ligne L7 est constant le long de la ligne L7 et il est égal au rayon de la portion d'arc de cercle C.

On note S une surface courbe qui passe par la ligne L7 et qui est parallèle aux axes de rotation X1 A et X1 B des roues 1 A et 1 B. La surface courbe S à la géométrie d'une portion de cylindre à section circulaire, ayant comme rayon celui du cercle C.

Le long de la ligne L7, le centre du cercle de courbure C est situé d'un même côté de la surface courbe S, à savoir en dessous de la surface courbe S.

Ainsi, le long de la ligne L7, la poutre 7 est incurvée toujours dans le même sens. La ligne L7 ne comporte pas de points d'inflexion, c'est-à-dire pas de changement de concavité.

Le rayon du cercle de courbure C de la poutre 7 est adapté à la distance verticale entre les boites d'essieux 2A et 2B et la position haute souhaitée pour le capteur de courant 8. Le rayon du cercle de courbure C est compris entre 1000 mm et 5000 mm, de préférence entre 2000 et 4000 mm. Dans l'exemple représenté sur les figures, le rayon de courbure est égal à environ 3060 mm.

La poutre 7 est revêtue d'un revêtement électriquement isolant empêchant la circulation par rampage de courants parasites. Par exemple, il peut s'agir d'une peinture, d'un vernis, d'un traitement de surface ou d'une opération de rilsanisation.

On note E1 et E2 les extrémités longitudinales de la poutre 7. Au niveau des extrémités E1 et E2, la poutre 7 comporte des encoches débouchantes qui permettent la fixation de pattes 72 rapportées, prévues pour la fixation de la poutre 7 sur les boîtes d'essieux 2A et 2B. Les pattes de fixation 72 sont fixées au moyen de boulons 70 sur la poutre 7 et sont montées en partie basse des boîtes d'essieux 2A et 2B. La fixation de la poutre 7 en partie basse des boîtes d'essieux 2A et 2B est imposée par la géométrie globale du bogie 100.

Les extrémités E1 et E2 de la poutre 7 comportent des trous de passage pour les boulons 70, ces trous constituant des moyens de fixation de la poutre 7 sur les boites d'essieux 2A et 2B. En variante, des goupilles de reprise d'effort sont ajoutées aux boulons 70.

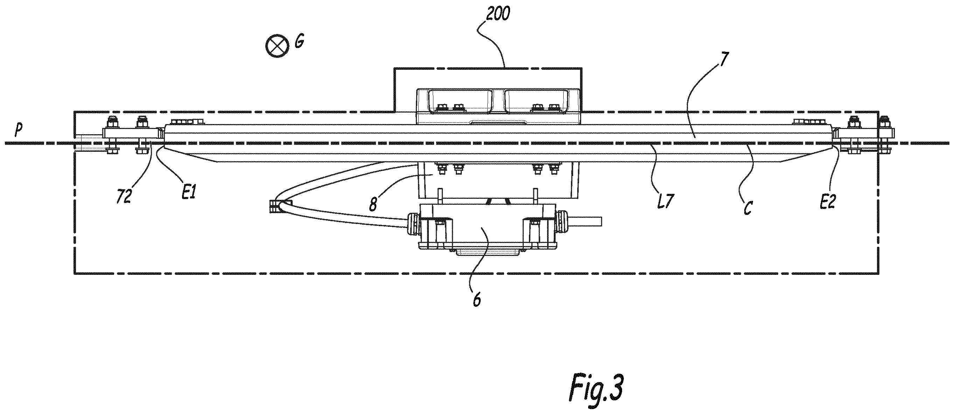

En référence aux figures 3 et 4, un gabarit 200 représenté en traits mixtes délimite un contour que les éléments constituant le bogie 100 ne doivent pas dépasser afin qu'ils n'entrent pas en contact avec des obstacles présents le long de la voie ferrée. La forme incurvée de la poutre 7 permet d'intégrer le capteur de courant 8 au bogie 100, sans dépasser les limites du gabarit 200.

Dans une première étape a) de fabrication du bogie 100, les roues 1A et 1B, les boîtes d'essieux 2A et 2B, la poutre 7 et le capteur de courant 8 sont fabriqués séparément.

Dans une première sous-étape a1) de la première étape a), on fabrique une barre métallique rectiligne, par exemple par pliage et soudage d'une plaque métallique ou par extrusion au moyen d'une filière.

Dans une deuxième sous-étape a2) de la première étape a), postérieure à la première sous-étape a1), la barre métallique est cintrée afin de lui conférer sa forme incurvée. Par exemple, le ceintrage est réalisé au moyen d'une cintreuse à galets.

Dans une deuxième étape b) postérieure à la première étape a), les roues 1A et 1 B, les boîtes d'essieux 2A et 2B, la poutre 7 et le capteur de courant 8 sont assemblés entre eux. En particulier, les extrémités E1 et E2 de la poutre 7 sont assemblées aux boites d'essieux 2A et 2B, au moyen des pattes de fixation 72, et le capteur de courant 8 est fixé sur la poutre 7 avec les boulons 80.

En fonctionnement, la poutre 7 et le capteur de courant 8 subissent des violents chocs et des vibrations. La forme incurvée de la poutre 7 lui confère une tenue mécanique satisfaisante pour résister à ces sollicitations mécaniques. La courbure vers le haut de la poutre 7 permet de limiter l'amplitude des déformations de la poutre 7 lorsqu'elle est soumise aux efforts liés au poids du capteur de courant 8.

En comparaison avec une poutre rectiligne de l'art antérieur, la poutre 7 de l'invention présente des modes propres vibrations dont la fréquence est plus élevée, ce qui permet de réduire les vibrations subies par le capteur de courant 8. Ainsi, les contraintes mécaniques subies par la poutre 7 et le capteur de courant 8 sont diminuées.

L'invention s'applique également pour d'autres géométries de bogies, la poutre 7 pouvant alors être fixée en d'autres zones du bogie 100 comme par exemple le chassis du bogie 100, notamment le longeron 5. Le sens de la courbure de la poutre 7 peut alors être différent de celui de l'exemple montré sur les figures. Par exemple, la poutre 7 peut être incurvée vers le bas.

En variante, la poutre 7 présente une section transversale quelconque, par exemple une section circulaire, en I ou en U.

Dans une autre variante, la poutre 7 est pleine.

En variante non représentée, le rayon de courbure de la ligne L7 varie le long de la ligne L7, de manière continue. Dans ce cas, le long de la ligne L7, le cercle de courbure C a un rayon qui varie de manière continue. Le cercle C correspond au cercle de courbure de la ligne L7 et il est tangent à la ligne L7. Le cercle de courbure est encore appelé cercle osculateur. Il s'agit, pour chaque point de la ligne L7, du cercle qui épouse la ligne L7 le mieux possible.

Dans tous les cas, le rayon de courbure de la ligne L7 est continument variable, autrement dit les variations du rayon du cercle de courbure sont nulles ou continues. Ainsi, la forme de la ligne L7 ne présente pas de cassures. Dans le cas où les variations du rayon du cercle de courbure sont nulles, la poutre 7 a la forme d'un arc de cercle, comme représenté sur les figures.

Le bogie 100 considéré dans son ensemble comprend quatre roues, quatre boites d'essieu, deux essieux, deux longerons et deux capteurs de courant.

Dans le cadre de l'invention, les variantes décrites peuvent être combinées entre elles, au moins partiellement.

## Revendications

1. Bogie (100) de véhicule ferroviaire, le bogie (100) comprenant :
- au moins deux roues (1A, 1 B) supportées chacune par une boite d'essieu (2A, 2B) et
- un longeron (5) de liaison mécanique des boites d'essieux (2A, 2B),
- une poutre (7) s'étendant entre les boites d'essieu (2A, 2B) et supportant un organe (8) de transmission d'un courant électrique à un rail (R2) d'une voie ferrée,
**caractérisé**
- **en ce que** la poutre (7) s'étend le long d'une ligne (L7) incurvée qui présente un rayon de courbure continument variable le long de la ligne incurvée (L7),
- **en ce que** la poutre (7) est réalisée à partir d'un alliage métallique et ne présente pas de soudure perpendiculaire à la ligne incurvée (L7) et
- **en ce que** le long de la ligne incurvée (L7), des centres de cercles de courbure (C) tangents à la ligne incurvée (L7) sont situés d'un même côté d'une surface courbe (S) qui passe par la ligne incurvée (L7) et qui est parallèle aux axes de rotation (X1A, X1 B) des roues (1A, 1 B).

2. Bogie (100) selon la revendication 1, **caractérisé en ce que** les centres des cercles de courbure (C) sont situés en dessous de la surface courbe (S).

3. Bogie (100) selon l'une des revendications précédentes, **caractérisé en ce que** la ligne incurvée (L7) est incurvée dans une direction (D) qui est incluse dans un plan (P) perpendiculaire aux axes de rotation (X1A, X1 B) des roues (1A, 1 B).

4. Bogie (100) selon l'une des revendications précédentes, **caractérisé en ce que** la poutre (7) est creuse, avec notamment une section de forme carrée, en forme de « U » ou circulaire.

5. Bogie (100) selon l'une des revendications précédentes, **caractérisé en ce qu'**un rayon de courbure de la ligne incurvée (L7) est constant le long de la ligne incurvée (L7).

6. Bogie (100) selon l'une des revendications précédentes, **caractérisé en ce que** la poutre (7) est revêtue d'un revêtement électriquement isolant.

7. Bogie (100) selon l'une des revendications précédentes, **caractérisé en ce qu'**une crémaillère (88) est intégrée dans l'organe (8) de transmission du courant électrique pour le réglage de la position d'un frotteur (84) prévu pour venir en contact avec le rail (R2), par rapport à un corps (82) de l'organe (8) de transmission du courant électrique.

8. Bogie (100) selon l'une des revendications précédentes, **caractérisé en ce que** l'organe (8) de transmission du courant électrique est logé dans un boitier réalisé à partir d'un matériau électriquement isolant.

9. Procédé de fabrication d'une poutre (7) de bogie (100) de véhicule ferroviaire selon la revendication 1, **caractérisé en ce que** la poutre (7) est fabriquée par cintrage d'une barre métallique rectiligne, notamment au moyen d'une cintreuse à galets.

10. Procédé selon la revendication 9, **caractérisé en ce que** la barre métallique est fabriquée par pliage et soudage d'une plaque métallique ou par extrusion au moyen d'une filière.

## Patentansprüche

1. Drehgestell (100) für ein Schienenfahrzeug, wobei das Drehgestell (100) umfasst:
- mindestens zwei Räder (1A, 1B), die jeweils von einer Achsbuchse (2A, 2B) gelagert sind und
- einen Längsträger (5) zur mechanischen Verbindung der Achsbuchsen (2A, 2B),
- einen sich zwischen den Achsbuchsen (2A, 2B) erstreckenden Stützträger (7), der ein Element (8) zur Übertragung eines elektrischen Stroms auf eine Schiene (R2) eines Schienenweges trägt,
**dadurch gekennzeichnet, dass**
- der Stützträger (7) sich entlang einer Krümmungslinie (L7) erstreckt, die einen entlang der Krümmungslinie (L7) kontinuierlich veränderlichen Krümmungsradius aufweist,
- der Stützträger (7) aus einer Metalllegierung hergestellt ist und senkrecht zur Krümmungslinie (L7) keine Verschweißung aufweist, und
- entlang der Krümmungslinie (L7) die Mitten der tangential zu der Krümmungslinie (L7) liegenden Krümmungskreise (C) auf derselben Seite einer Krümmungsfläche (S) angeordnet sind, die durch die Krümmungslinie (L7) hindurchgeht, und die parallel zu den Drehachsen (X1A, X1B) der Räder (1A, 1B) liegt.

2. Drehgestell (100) nach Anspruch 1, **dadurch gekennzeichnet, dass** die Mitten der Krümmungskreise (C) unter der Krümmungsfläche (S) liegen.

3. Drehgestell (100) nach einem der vorhergehenden Ansprüche, **dadurch gekennzeichnet, dass** die Krümmungslinie (L7) in eine Richtung (D) gekrümmt ist, die in einer Ebene (P) senkrecht zu den Drehachsen (X1A, X1B) der Räder (1A, 1B) eingeschlossen ist.

4. Drehgestell (100) nach einem der vorhergehenden Ansprüche, **dadurch gekennzeichnet, dass** der Stützträger (7) hohl ist und insbesondere einen viereckigen Querschnitt, einen Querschnitt in U-Form oder einen Kreisquerschnitt aufweist.

5. Drehgestell (100) nach einem der vorhergehenden Ansprüche, **dadurch gekennzeichnet, dass** der Krümmungsradius der Krümmungslinie (L7) entlang der Krümmungslinie (L7) konstant ist.

6. Drehgestell (100) nach einem der vorhergehenden Ansprüche, **dadurch gekennzeichnet, dass** der Stützträger (7) mit einer elektrisch isolierenden Beschichtung beschichtet ist.

7. Drehgestell (100) nach einem der vorhergehenden Ansprüche, **dadurch gekennzeichnet, dass** eine Zahnstange (88) in dem Element (8) zur Übertragung des elektrischen Stroms für die Einstellung der Position eines Reibelements (84) in Bezug auf einen Körper (82) des Elements (8) zur Übertragung des elektrischen Stroms integriert ist, wobei das Reibelement vorgesehen ist, in Kontakt mit der Schiene (R2) zu kommen.

8. Drehgestell (100) nach einem der vorhergehenden Ansprüche, **dadurch gekennzeichnet, dass** das Element (8) zur Übertragung des elektrischen Stroms in einem Gehäuse aufgenommen ist, das aus einem elektrisch isolierenden Material hergestellt ist.

9. Verfahren zur Herstellung eines Stützträgers (7) für ein Drehgestell (100) eines Schienenfahrzeugs nach Anspruch 1, **dadurch gekennzeichnet, dass** der Stützträger (7) durch Biegen eines geradlinigen Metallstabs, insbesondere mittels einer Walzenbiegevorrichtung hergestellt ist.

10. Verfahren nach Anspruch 9, **dadurch gekennzeichnet, dass** die Metallstange durch Umbiegen und Schweißen einer Metallplatte oder durch Extrusion mittels einer Düse hergestellt wird.

## Claims

1. A truck (100) for a railroad vehicle, the truck (100) comprising:
- at least two wheels (1 A, 1 B), each supported by an axle box (2A, 2B), and
- a side frame (5) for mechanically connecting the axle boxes (2A, 2B),
- a beam (7) extending between the axle boxes (2A, 2B) and supporting a device (8) for transmitting electrical current to a rail (R2) of a railroad track,
**characterized in that**:
- the beam (7) extends along a curved line (L7) that has a curve radius varying continually along the curved line (L7),
- the beam (7) is made from a metal alloy and does not have a weld perpendicular to the curved line (L7), and
- along the curved line (L7), centers of curved circles (C) tangent to the curved line (L7) are situated on the same side of a curved surface (S) that passes through the curved line (L7) and is parallel to the rotation axes (X1A, X1 B) of the wheels (1A, 1 B).

2. The truck (100) according to claim 1, **characterized in that** the centers of the curved circles (C) are situated below the curved surface (S).

3. The truck (100) according to one of the preceding claims, **characterized in that** the curved line (L7) is curved in a direction (D) that is included in a plane (P) perpendicular to the rotation axes (X1 A, X1 B) of the wheels (1 A, 1 B).

4. The truck (100) according to one of the preceding claims, **characterized in that** the beam (7) is hollow, in particular with a square, U-shaped or circular cross-section.

5. The truck (100) according to one of the preceding claims, **characterized in that** a curve radius of the curved line (L7) is constant along the curved line (L7).

6. The truck (100) according to one of the preceding claims, **characterized in that** the beam (7) is coated with an electrically insulating coating.

7. The truck (100) according to one of the preceding claims, **characterized in that** a rack (88) is integrated into the transmission member (8) of the electrical current to adjust the position of a collector shoe (84) provided to come into contact with the rail (R2), relative to a body (82) of the transmission member (8) of the electrical current.

8. The truck (100) according to one of the preceding claims, **characterized in that** the transmission member (8) of the electrical current is housed in a housing made from an electrically insulating material.

9. A method for manufacturing a beam (7) for a truck (100) of a railway vehicle according to claim 1, **characterized in that** the beam (7) is manufactured by sintering a straight metal bar, in particular using a roller bending machine.

10. The method according to claim 9, **characterized in that** the metal bar is manufactured by folding and welding a metal plate or by extrusion using a die.
